# EUROPÄISCHE PATENTSCHRIFT

(11) **EP 0 934 670 B1**
(45) Veröffentlichungstag und Bekanntmachung des Hinweises auf die Patenterteilung: **12.05.2004**
(21) Anmeldenummer: 97913095.2
(22) Anmeldetag: 10.10.1997
(51) Int. Cl.: H04Q 7/38

(54) **VERFAHREN ZUM STEUERN DES ANMELDENS VON SCHNURLOS-MOBILTEILEN BEI SCHNURLOS-BASISSTATIONEN UNIVERSELLER MOBIL-TELEKOMMUNIKATIONSSYSTEME, INSBESONDERE VON DECT-MOBILTEILEN BEI DECT-BASSISSTATIONEN CAP-SPEZIFISCHER TELEKOMMUNIKATIONSSYSTEME**
METHOD FOR CONTROLLING LOGGING OF WIRELESS MOBILE COMPONENTS ONTO WIRELESS BASE STATIONS OF UNIVERSAL MOBILE TELECOMMUNICATION SYSTEMS, ESPECIALLY DECT MOBILE COMPONENTS IN DECT BASE STATIONS OF CAP SPECIFIC TELECOMMUNICATION SYSTEMS
PROCEDE POUR LA COMMANDE DE LA DEMANDE DE CONNEXION DE PARTIES MOBILES SANS FIL DANS DES STATIONS DE BASE SANS FIL DE SYSTEMES DE TELECOMMUNICATIONS MOBILES UNIVERSELS, NOTAMMENT DE PARTIES MOBILES DE DECT DANS DES STATIONS DE BASE DE DECT DE SYSTEMES DE TELECOMMUNICATIONS SPECIFIQUES DE CAP

(30) Priorität: 22.10.1996 DE 19643658
(43) Veröffentlichungstag der Anmeldung: 11.08.1999
(73) Patentinhaber: SIEMENS AKTIENGESELLSCHAFT, 80333 München (DE)
(72) Erfinder: SCHMITZ, Georg, D-46395 Bocholt (DE); KAMPERSCHROER, Erich, D-46499 Hamminkeln (DE); KORDSMEYER, Martin, D-48477 Hörstel (DE); BECKERS, Michael, D-46395 Bocholt (DE)
(86) Internationale Anmeldenummer: PCT/DE1997/002323
(87) Internationale Veröffentlichungsnummer: WO 1998/018275

(56) Entgegenhaltungen:
- EP-A- 0 336 079
- EP-A- 0 447 380
- DE-A- 19 542 732
- GB-A- 2 289 828

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zum Steuern des Anmeldens von Schnurlos-Mobilteilen bei Schnurlos-Basisstationen universeller Mobil-Telekommunikationssysteme, insbesondere von DECT-Mobilteilen bei DECT-Basisstationen CAP-spezifischer Telekommunikationssysteme gemäß dem Oberbegriff des Patentanspruches 1.

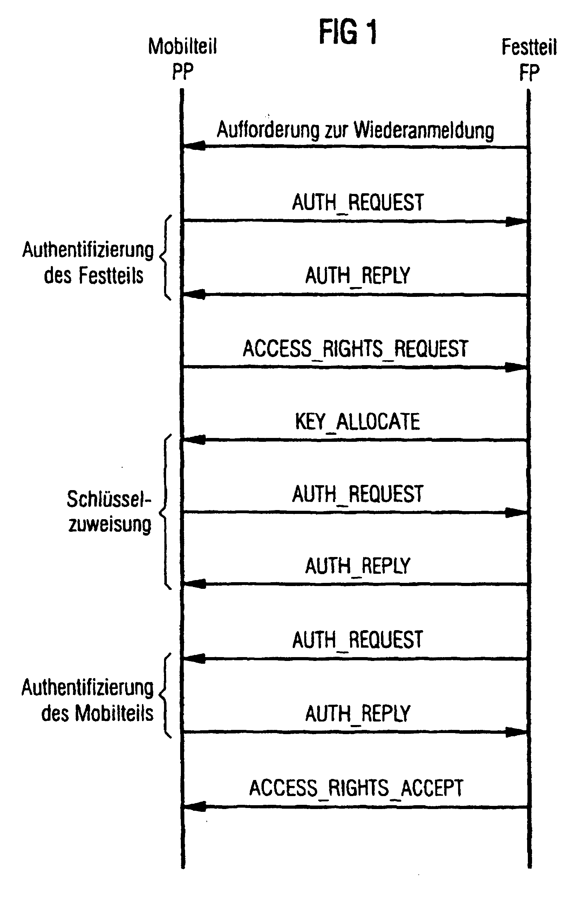

In der WO95/05040 ist ein Szenario für ein **"U**niverselles **M**obil-**T**elekommunikations-**S**ystem" (UMTS) dargestellt und beschrieben (Figuren 3 bis 8 mit der jeweils dazugehörigen Beschreibung), bei dem es im wesentlichen darum geht, pikozellenbezogene Schnurlos-Telekommunikationssysteme [*z.B.* ***(I):*** *DECT-Systeme;* ***D****igital* ***E****nhanced* ***C****ordless* ***T****elecommunication, (vgl.* ***(1):*** *Nachrichtentechnik Elektronik 42 (1992) Jan.*/*Feb. Nr. 1, Berlin, DE; U. Pilger "Struktur* des *DECT-Standards", Seiten 23 bis 29* ***in Verbindung mit*** *der ETSI-Publikation ETS 300175-1...9, Okt. 1992;* ***(2):*** *Telcom Report 16 (1993), Nr. 1, J. H. Koch: "Digitaler Komfort für schnurlose Telekommunikation - DECT-Standard eröffnet neue Nutzungsgebiete", Seiten 26 und 27;* ***(3):*** *tec 2*/*93 - Das technische Magazin von Ascom "Wege zur universellen mobilen Telekommunikation", Seiten 35 bis 42;* ***(4):*** *Philips Telecommunication Review Vol. 49, No. 3, Sept. 1991, R.J. Mulder:" DECT, a universal cordless access system";* ***(5):*** *WO 93*/*21719 (FIG 1 bis 3 mit dazugehöriger Beschreibung) und* ***(II):*** *DECT*/*GAP-Systeme; **G**eneric **A**ccess **P**rofile (vgl. ETSI-Publikation prETS 300444, April 1995, Final Draft)*] unter CTM-Gesichtspunkten *(****C****ordless* ***T****erminal* ***M****obility; vgl. ETSI-Publikationen* ***(1):*** *"IN Architecture and Functionali ty for the support of CTM", Draft Version 1.10, September 1995;* ***(2):*** *"Cordless Terminal Mobility (CTM) - Pha* *se 1, Service Description", Draft DE*/*NA-010039, Version 6, 2.Oktober 1995)* in eine übergeordnete Netzinfrastruktur *[z.B. ISDN-, PSTN-, GSM- und*/*oder Satelliten-Netze;* ***I****ntegrated* ***S****ervices* ***D****igital* ***N****etwork, (vgl. Druckschrift "Nachrichtentechnik Elektronik, Berlin 41-43,* ***T****eil: 1 bis 10,* ***T****1: (1991) Heft 3, Seiten 99 bis 102;* ***T****2: (1991) Heft 4, Seiten 138 bis 143;* ***T****3: (1991) Heft 5, Seiten 179 bis 182 und Heft 6, Seiten 219 bis 220;* ***T****4: (1991) Heft 6, Seiten 220 bis 222 und (1992) Heft 1, Seiten 19 bis 20;* ***T****5: (1992) Heft 2, Seiten 59 bis 62 und (1992) Heft 3, Seiten 99 bis 102;* ***T****6: (1992) Heft 4, Seiten 150 bis 153;* ***T****7: (1992) Heft 6, Seiten 238 bis 241;* ***T****8: (1993) Heft 1, Seiten 29 bis 33;* ***T****9: (1993) Heft 2, Seiten 95 bis 97 und (1993) Heft* 3, *Seiten 129 bis 135;* ***T****10: (1993) Heft 4, Seiten 187 bis 190;")* ***P****ublic* ***S****witched* ***T****elecommunication* ***N****etwork,* ***G****lobal* ***S****ystem for* ***M****obile-Communication (vgl. Informatik Spektrum 14 (1991) Juni, Nr. 3, Berlin, DE; A.Mann: "Der GSM-Standard - Grundlage für digitale europäische Mobilfunknetze", Seiten 137 bis 152)*] *für Zugriffe (vgl. ETSI-Publikation* ***"C****TM* ***A****ccess* ***P****rofile (CAP)" prETS 300???, September 1996)* **e**inzubinden. Dies kann - gemäß dem Patentanspruch 1 - durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(****vgl.*** *Publikation (Vortrag) von A. Elberse, M. Barry, G. Fleming zum Thema: "DECT Data Servi ces - DECT in Fixed and Mobile Networks", 17.*/*18. Juni 1996, Hotel Sofitel, Paris; Seiten 1 bis 12 und Zusammenfassung)* und nicht als Netz verstanden.

Aus der WO94/10785 ist ein Verfahren zum Zusammenschluß von Sende-/Empfangseinrichtungen eines Schnurlos-Kommunikationssystems zu einer kommunikationsfähigen Einheit bekannt, bei dem Schnurlos-Mobilteile bei Schnurlos-Basisstationen durch über Luftschnittstellen gemäß einem luftschnittstellenspezifischen Protokoll ablaufende Anmeldeprozeduren angemeldet werden und bei dem während dieser Anmeldung anmeldungspezifische Daten in den Schnurlos-Mobilteile gespeichert werden (Figuren 4 bis 12 mit der jeweils dazugehörigen Figurenbeschreibung).

Im Rahmen des von ETSI standardisierten CTM Access Profile (CAP) ist es beabsichtigt, daß das Festteil (**F**ixed **P**art **F**P; z.B. die DECT-Basisstation) zugriffsrechtspezifische Parameter [z.B. die IPUI-Kennung (**I**nternational **P**ortable **U**ser **I**dentification; *vgl ETSI-Publikation ETS 300175-6,* Oktober *1992, Kap*. *6.2*), die PARK-Kennung (**P**ortable **A**ccess **R**ights **K**ey; *vgl ETSI-Publikation ETS 300175-6, Oktober 1992, Kap. 6.1*) und die PLI-Kennung (**P**ark **L**ength **I**ndicator; *vgl ETSI-Publikation ETS 300175-6, Oktober 1992, Kap. 6.1*)], die in dem bei dem Festteil bereits angemeldeten Mobilteil (**P**ortable **P**art PP; z.B. das DECT-Mobilteil) in einem nichtflüchtigen Speicher (z.B. EEPROM) gespeichert sind (vgl. WO94/10785), bei Bedarf ändern kann. Hierzu stößt das Festteil eine Wiederanmeldungsprozedur (Resubscription-procedure) gemäß FIGUR 1 an. Dabei werden gemäß des DECT-Standards *(vgl ETSI-Publikation ETS 300175-5, Oktober 1992*) die in der Figur 1 dargestellten Teilprozeduren "Authentifizierung des Festteils" *(vgl ETSI-Publikation ETS 300175-5, Oktober 1992, Kap. 13.3.3*), "Schlüsselzuweisung" *(vgl ETSI-Publikation ETS 300175-5, Oktober 1992, Kap. 13.6*) und "Authentifizierung des Mobilteils" *(vgl ETSI-Publikation ETS 300175-5, Oktober 1992, Kap. 13*.*3*.*1*) mit den in *ETS 300175-5, Oktober 1992, Kap. 6.3.6* angegebenen MM-Meldungen durchgeführt. Mit der Teilprozedur "Authentifizierung des Festteils" muß das Festteil FP sich als Festteil, das berechtigt ist, eine Resubscription-Prozedur anzustoßen, legitimieren bzw. ausweisen. Dadurch soll insbesondere vermieden werden, daß unberechtigte Personen ("Hacker") von einem beliebigen Festteil eine Resubscription-Prozedur anstoßen können. Mit den Teilprozeduren "Schlüsselzuweisung" und "Authentifizierung des Mobilteils" werden die Zugriffsrechte gemäß *ETS 300175-5, Oktober 1992, Kap. 13.5.1* vergeben.

Bisher war es hierbei üblich, das die bei der vorangegangenen Anmeldung gespeicherten Daten (z.B. die vorstehend angegebenen Kennungen) - sowohl im Festteil FP als auch im Mobilteil PP - alle gelöscht worden sind. Dies hatte zur Folge, daß die Anmeldungsprozedur, also sämtliche in der FIGUR 1 dargestellten Teilprozeduren, komplett wiederholt werden mußte.

Aus der EP-0 336 079 A2 und der GB-2 289 828 A ist jeweils ein Verfahren zum Steuern des Anmeldens von Schnurlos-Mobilteilen bei Schnurlos-Basisstationen universeller Mobil-Telekommunikationssysteme bekannt, bei dem jeweils eine in dem Schnurlos-Mobilteil gespeicherte persönliche Kennung (password, ID) insbesondere auf Anforderung durch die Schnurlos-Basisstation modifiziert werden kann.

Aus der nachveröffentlichten DE-195 42 732 A1 ist ein Verfahren zur Erkennung des Mißbrauchs einer Zugangsberechtigung, insbesondere in.Mobilfunksystemen bekannt, bei dem zur Identifizierung vor jeder Interaktion übertragenen, variablen Daten bei jeder Interaktion zumindestens teilweise durch neue Daten überschrieben werden, die von einer Auswerteeinrichtung gereriert und zu einem Speichermedium übertragen werden und die bei der nächsten Interaktion von der Auswerte-/Entscheidungseinrichtung als neues Schlüsselwort zur Identifizierung verlangt werden.

Die der Erfindung zugrundeliegende Aufgabe besteht darin, Schnurlos-Mobilteile bei Schnurlos-Basisstationen universeller Mobil-Telekommunikationssysteme, insbesondere DECT-Mobilteile bei DECT-Basisstationen CAP-spezifischer Telekommunikationssysteme, ohne großen Aufwand wiederanzumelden.

Diese Aufgabe wird ausgehend von dem in dem Oberbegriff des Patentanspruches 1 definierten Verfahren durch die in dem Kennzeichen des Patentanspruches 1 angegebenen Merkmale gelöst.

Die der Erfindung zugrundeliegende Idee besteht darin, Schnurlos-Mobilteile bei Schnurlos-Basisstationen universeller Mobil-Telekommunikationssysteme, insbesondere DECT-Mobilteile bei DECT-Basisstationen CAP-spezifischer Telekommunikationssysteme, ohne großen Aufwand wiederanzumelden, indem die aus einer vorangegangenen Anmeldung resultierenden, gespeicherten, anmeldungsspezifischen Daten kopiert, .wobei die Daten zwischenzeitlich doppelt vorhanden sind, die kopierten Daten anschließend mindestens teilweise bearbeitet und die kopierten, mindestens teilweise bearbeiteten, wiederanmeldungsspezifischen Daten als neue anmeldungsspezifische Daten gespeichert werden.

Weitere vorteilhafte Weiterbildungen der Erfindung sind in übrigen den Unteransprüchen angegeben.

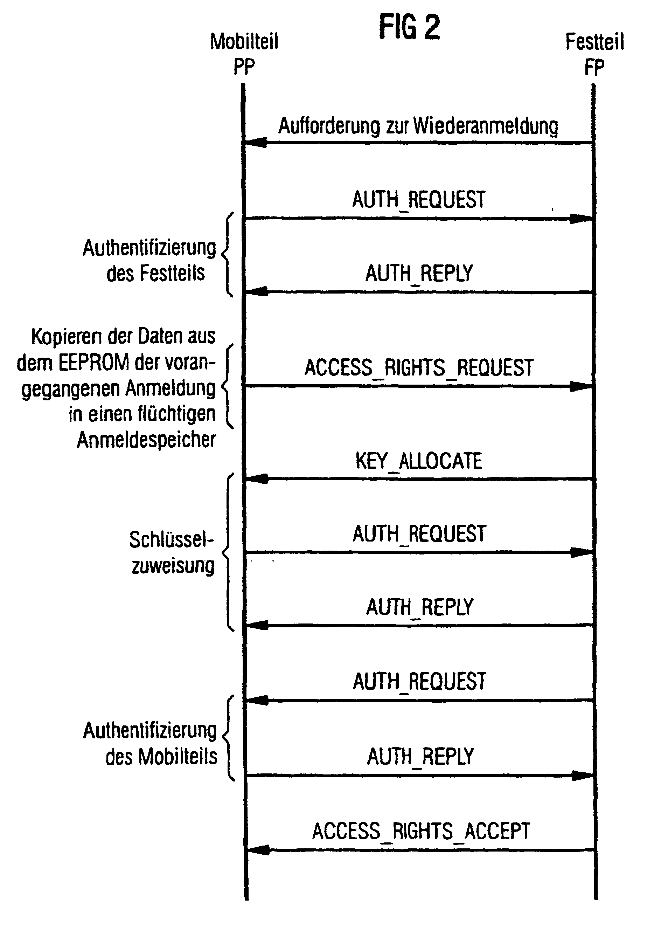

Ein Ausführungsbeispiel der Erfindung wird anhand der FIGUR 2 erläutert.

FIGUR 2 zeigt ausgehend von FIGUR 1, wie nach der Teilprozedur "Authentifizierung des Festteils" und vor der Teilprozedur "Schlüsselzuweisung" das Mobilteil PP die in dem nicht-flüchtigen Speicher (z.B. das EEPROM) gespeicherten Daten aus der vorangegangenen Anmeldungsprozedur für Änderungen durch das Festteil FP in einen flüchtigen Anmeldespeicher kopiert.

Zu diesen Daten gehören neben den bereits mit der Beschreibung der FIGUR 1 erwähnten zugriffsrechtspezifischen Parametern (PARK, IPUI, PLI etc.) auch ein als PIN-Wort ausgebildetes, bei der Erstanmeldung vom Benutzer des Mobilteils PP einzugebendes AC-Wort (Authentication Code; vgl. ETSI-Publikation ETS300175-7, Oktober 1992, Kap. 4.4.3.1., Punkt 3)) bzw. ein aus dem AC-Wort berechnetes UAK-Wort (User Authentication Key; vgl. ETSI-Publikation ETS300175-7, Oktober 1992, Kap. 4.4.3.1., Punkt 1) und Figur 1 iVm Kap. 4.5., 4.6. und 5.). Die Ausgangssituation bei einer Erstanmeldung des Mobilteils PP bei dem Festteil FP ist, daß das AC-Wort als systemspezifisches (das Mobil- und Festteil betreffend) PIN-Wort in dem Festtteil FP gespeichert ist und im Mobilteil PP eingegeben und gespeichert wird.

Wenn in der vorangegangenen Anmeldung (z. B. der Erstanmeldung) beispielsweise nach der Eingabe und Speicherung des AC-Wortes aufgrund der von dem Festteil FP an das Mobilteil PP übertragenen Meldung "KEY_ALLOCATE" [vgl. ETSI-Publikation ETS300175-5, Oktober 1992, Kap. 13.6.] das UAK-Wort gemäß der ETSI-Publikation ETS300175-7, Oktober 1992, Figur 1 iVm Kap. 4.5., 4.6. und 5 sowohl im Festteil FP als auch im Mobilteil PP berechnet worden ist, wird im Festteil FP und Mobilteil PP das gespeicherte AC-Wort durch das UAK-Wort ersetzt. Wird hingegen das UAK-Wort nicht berechnet, was alternativ auch möglich ist, dann bleibt das AC-Wort im Festteil FP und Mobilteil PP unverändert abgespeichert. Wird nun vom Festteil FP gemäß FIGUR 2 nach der Erstanmeldung (vorangegangene Anmeldung) eine Wiederanmeldungsprozedur (Resubscription-Prozedur) gestartet und werden die gespeicherten Daten weder im Unterschied zu den Ausführungen zu FIGUR 1 im Festteil FP und Mobilteil PP gelöscht noch im Unterschied zur FIGUR 2 im Mobilteil PP kopiert, so führt insbesondere eine mit der Resubscription-Prozedur verfolgte in dem flüchtigen Speicher festgehaltene Teiländerung eines in dem Mobilteil PP nichtflüchtig gespeicherten Datums durch das Festtteil FP bei Berücksichtigung dieser Änderung im nicht-flüchtigen Speicher des Mobilteils PP zum Verlust sämtlicher bis dahin in dem nicht-flüchtigen Speicher gespeicherten Daten. Um dieses zu verhindern, wird der aus der vorangegangenen Anmeldung resultierende, im nicht-flüchtigen Speicher des Mobilteils PP gespeicherte Datensatz - wie vorstehend bereits erwähnt - in den flüchtigen Speicher für vom Festteil FP mit der Resubscription-Prozedur beabsichtigte Änderungen kopiert.

Dadurch, daß die Daten zwischenzeitlich doppelt vorhanden sind, kann das Festteil FP jetzt gezielt die eingangs angegebenen Daten (Kennungen) ändern, ohne dabei - wie beim Vorgehen gemäß FIGUR 1 - sämtliche Teilprozeduren wiederholen zu müssen. Sind die Daten nach der Wiederanmeldungsprozedur durch das Festteil FP entsprechend geändert worden, so wird der Inhalt des Anmeldespeichers (vorzugsweise ein Datenmix aus zwei aufeinanderfolgenden Anmeldungsprozeduren) in den nichtflüchtigen Speicher (z.B. das EEPROM) übernommen.

## Patentansprüche

1. Verfahren zum Steuern des Anmeldens von Schnurlos-Mobilteilen bei Schnurlos-Basisstationen universeller Mobil-Telekommunikationssysteme, insbesondere von DECT-Mobilteilen bei DECT-Basisstationen CAP-spezifischer Telekommunikationssysteme,
a) die Schnurlos-Mobilteile (PP) werden bei den Schnurlos-Basisstationen (FP) durch über Luftschnittstellen gemäß einem luftschnittstellenspezifischen Protokoll ablaufende Anmeldeprozeduren angemeldet,
b) beim Anmelden der Schnurlos-Mobilteile (PP) werden anmeldungsspezifische Daten gespeichert,
**dadurch gekennzeichnet, daß**
c) beim Wiederanmelden der Schnurlos-Mobilteile (PP) die gespeicherten anmeldungsspezifischen Daten derart kopiert werden, daß die anmeldungsspezifischen Daten doppelt vorhanden sind,
d) während einer Wiederanmeldeprozedur zum Ändern von zugriffsspezifischen, den Daten zugehörigen Parametern des Schnurlos-Mobilteils (PP) die kopierten Daten mindestens teilweise bearbeitet werden,
e) die kopierten, mindestens teilweise bearbeiteten, wiederanmeldungsspezifischen Daten als neue anmeldungsspezifische Daten gespeichert werden.

2. Verfahren nach Anspruch 1, **dadurch gekennzeichnet, daß**
das Wiederanmelden durch die Schnurlos-Basisstationen veranlaßt wird.

## Claims

1. Method for controlling the registration of portable parts on fixed parts of universal mobile telecommunication systems, in particular DECT handsets on DECT base stations of CAP-specific telecommunication systems,
a) the portable parts (PP) are registered on fixed parts (FP) by means of registration procedures via air interfaces in accordance with an air-interface-specific protocol,
b) registration-specific data is stored when the portable parts (PP) are registered,
**characterized in that**
c) when the portable parts (PP) are reregistered the stored registration-specific data is copied so that the registration-specific data is available in duplicate,
d) during a reregistration procedure the copied data is edited at least in part to change access-specific data-related parameters of the portable part (PP),
e) the copied at least partially edited reregistration-specific data is stored as new registration-specific data.

2. Method in accordance with Claim 1,**characterized in that** reregistration is initiated by the fixed parts.

## Revendications

1. Procédé pour la commande de la demande de connexion de parties mobiles sans fil dans des stations de base sans fil de systèmes de télécommunications mobiles universels, notamment de parties mobiles de DECT dans des stations de base de DECT de systèmes de télécommunications de CAP,
a) Les parties mobiles sans fil (PP) font l'objet d'une demande de connexion auprès des stations de base sans fil (FP) au moyen d'interfaces radio selon des procédures de demande de connexion se déroulant selon un protocole spécifique aux interfaces radio,
b) Lors de la demande de connexion des parties mobiles sans fil (PP), des données spécifiques à la demande de connexion sont mémorisées,
**caractérisé en ce que**
c) lors de la demande de reconnexion des parties mobiles sans fil (PP) les données spécifiques à la demande de connexion mémorisées sont copiées de telle sorte que les données spécifiques à la demande de connexion soient présentes en double exemplaire,
d) pendant une procédure de demande de reconnexion pour la modification de paramètres spécifiques à l'accès et appartenant aux données de la partie mobile sans fil (PP), les données copiées sont traitées au moins partiellement,
e) les données copiées, traitées au moins partiellement, spécifiques à la demande de reconnexion, sont mémorisées comme nouvelles données spécifiques à la demande de connexion.

2. Procédé selon la revendication 1, **caractérisé en ce que** la demande de reconnexion est déclenchée par les stations de base sans fil.
